# EUROPEAN PATENT APPLICATION

(11) **EP 4 607 649 A1**
(43) Date of publication of application: **27.08.2025**
(21) Application number: 24785418.5
(22) Date of filing: 04.04.2024
(51) Int. Cl.: H01M 10/0567, H01M 10/052

(54) **NONAQUEOUS ELECTROLYTE AND LITHIUM SECONDARY BATTERY COMPRISING SAME**

(30) Priority: 07.04.2023 KR 20230046159
(71) Applicant: LG Energy Solution, Ltd., Seoul 07335 (KR)
(72) Inventor: BAEK, Ga Young, Daejeon 34122 (KR); LEE, Chul Haeng, Daejeon 34122 (KR); LEE, Kyung Mi, Daejeon 34122 (KR); LEE, Jung Min, Daejeon 34122 (KR); JI, Su Hyeon, Daejeon 34122 (KR); YEOM, Chul Eun, Daejeon 34122 (KR); CHO, Yoon Gyo, Daejeon 34122 (KR)
(74) Representative: Hoffmann Eitle
(86) International application number: PCT/KR2024/095684
(87) International publication number: WO 2024/210729

(57) **Abstract**

A non-aqueous electrolyte includes a lithium salt, an organic solvent, a compound represented by Formula 1 as a first additive, and a compound represented by Formula 2 or Formula 3 as a second additive, wherein in Formula 1 R represents any one selected from a C1-5 perfluoroalkyl group, a C2-10 alkenyl group, and a C2-10 alkynyl group; in Formula 2, R₁ represents a C1-3 alkylene group that can be substituted with fluorine, and R₂ to R₄ each independently represent any one selected from the group consisting of H, a C1-3 alkyl group, and a nitrile group; in Formula 3, R₅ represents a C1-8 alkylene group that can be substituted with fluorine, and R₆ represents any one selected from the group consisting of H, a C1-10 alkyl group, and a C3-8 cycloalkyl group:

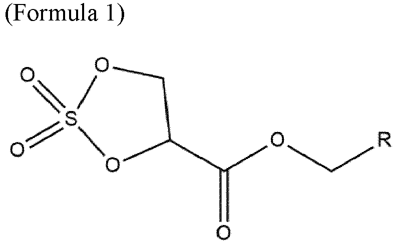

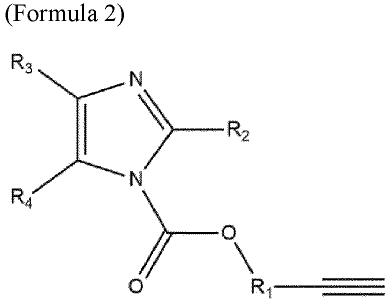

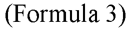

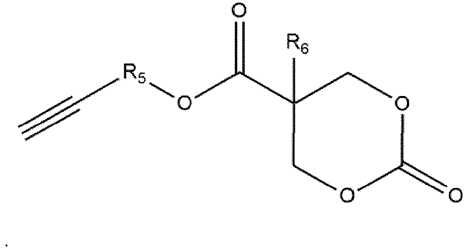

## Description

### TECHNICAL FIELD

### [CROSS-REFERENCE TO RELATED APPLICATIONS]

This application is based on and claims priority from Korean Patent Application No. 10-2023-0046159, filed on April 7, 2023, with the Korean Intellectual Property Office, the disclosure of which is incorporated herein in its entirety by reference.

### [TECHNICAL FIELD]

The present disclosure relates to a non-aqueous electrolyte and a lithium secondary battery including the same.

### BACKGROUND ART

Recently, the applications of lithium secondary batteries have rapidly expanded from the supply of power for electricity, electronics, communication, and electronic devices such as computers to the storage and supply of power for large-sized devices such as automobiles and energy storage systems. Consequently, there is an increasing demand for secondary batteries with a high capacity, high power, and high stability.

Especially, in lithium secondary batteries for automobiles, the high-capacity, high-power, and long-life characteristics are gaining importance. In order to implement the high capacity of secondary batteries, a high-nickel content positive electrode active material with high energy density but low stability may be used, or the secondary batteries may be driven at high voltage.

### DISCLOSURE OF THE INVENTION

### TECHNICAL PROBLEM

The present disclosure provides a non-aqueous electrolyte with increased stability at high voltage and temperature, which is capable of suppressing deterioration of the positive electrode, reducing side reactions between the positive electrode and the electrolyte, and forming a stable solid electrolyte interphase (SEI) film on the negative electrode.

Further, the present disclosure provides a lithium secondary battery having improved high-voltage cycling characteristics, high-temperature storage characteristics, and thermal stability by including the non-aqueous electrolyte.

### TECHNICAL SOLUTION

According to an aspect, the present disclosure provides a non-aqueous electrolyte containing a lithium salt, an organic solvent, a compound represented by Formula 1 as a first additive, and a compound represented by Formula 2 or Formula 3 as a second additive.

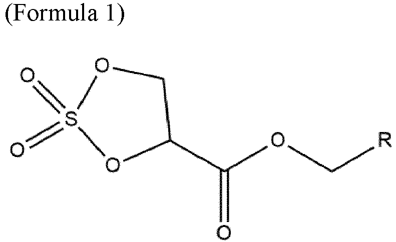

In Formula 1, R represents any one selected from a perfluoroalkyl group having 1 to 5 carbon atoms, an alkenyl group having 2 to 10 carbon atoms, and an alkynyl group having 2 to 10 carbon atoms.

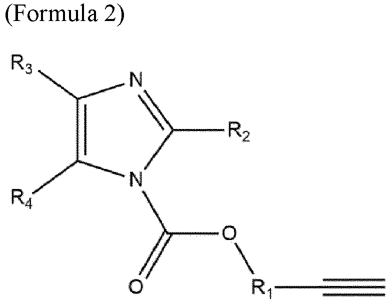

In Formula 2, R₁ represents an alkylene group having 1 to 3 carbon atoms that may be substituted with fluorine, and R₂ to R₄ each independently represent any one selected from the group consisting of H, an alkyl group having 1 to 3 carbon atoms, and a nitrile group.

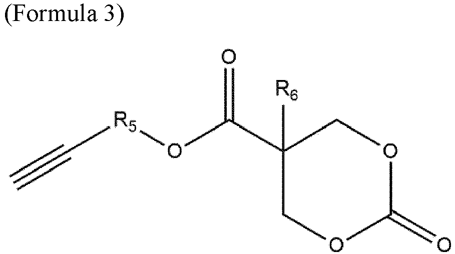

In Formula 3, R₅ represents an alkylene group having 1 to 8 carbon atoms that may be substituted with fluorine, and R₆ represents any one selected from the group consisting of H, an alkyl group having 1 to 10 carbon atoms, and a cycloalkyl group having 3 to 8 carbon atoms.

According to another aspect, the present disclosure provides a lithium secondary battery including a positive electrode, a negative electrode, a separator, and the above-described non-aqueous electrolyte.

### ADVANTAGEOUS EFFECTS

The compound of Formula 1 provided as the first additive of the present disclosure is a cyclic sulfate-based compound, and the film formed through the ring-opening reaction of cyclic sulfate may help improve high-temperature durability and implements the effect of improving high-temperature performance. In particular, the compound of Formula 1 may form a film having a high lithium mobility due to its structure containing a large amount of O resulting from the COO group. In addition, the compound contains functional groups such as F-based, vinyl, and propargyl groups in the structure, which contribute to improving the stability of the battery through the formation of an organic/inorganic composite film. Therefore, the first additive of the present disclosure may suppress the degradation in the passivation ability of the SEI at high temperatures, prevents deterioration of the positive electrode, and improves overall performance, such as charge/discharge characteristics and output of the lithium secondary battery.

The compound of Formula 2 or Formula 3 provided as the second additive of the present disclosure contains a propargyl group in the molecule and improves high temperature durability. The SEI film produced through the negative electrode reduction of the compound of Formula 2 or Formula 3 contains a propargyl group, and the propargyl group becomes a cross-link site in SEI, which allows for further reactions. As additional cross-linking reaction proceeds, a solid SEI film is formed, which is effective in suppressing or inhibiting performance degradation due to negative electrode electrodeposition of transition metal eluted from the positive electrode. In addition, the cyclic carbonate functional group and the imidazole functional group contained in the additives of Formula 2 or Formula 3 inhibit side reactions and positive electrode degradation at the positive electrode surface through the formation of a stable positive electrode electrolyte interphase (CEI), thereby improving performance and reducing transition metal elution that may occur during high-voltage charging. That is, the compound of Formula 2 or Formula 3 provided as the second additive for the non-aqueous electrolyte of the present disclosure may form a stable ionic conductive film on the surfaces of the positive electrode and the negative electrode.

Therefore, when the non-aqueous electrolyte of the present disclosure containing both the first and second additives is used, the film-forming reaction of the second additive is promoted by radicals generated from the breakage of the ring structure of the first additive. The film formed by the interaction of the first additive and the second additive is highly durable at high temperatures and has the effect of inhibiting the elution of the positive electrode transition metal. Further, the film formed by the interaction of the first additive and the second additive forms a film with excellent lithium ion transfer characteristics, thereby improving overall performance, such as charge and discharge characteristics and output characteristics of the lithium secondary battery. The film formed by the interaction of the first additive and the second additive has excellent oxidation resistance, which may suppress side reactions occurring on the film of the positive electrode and the negative electrode even in an acidic atmosphere of the electrolyte. Further, the film formed by the interaction of the first additive and the second additive is highly resistant to negative electrode volume expansion that occurs during charging and discharging. Thus, the non-aqueous electrolyte of the present disclosure may form a stable and durable electrode-electrolyte interface even at high temperatures, and may suppress or inhibit unnecessary electrolyte decomposition side reactions, thereby enabling a lithium secondary battery with improved overall performance when compared with conventional lithium secondary batteries.

### DETAILED DESCRIPTION

The words or terms used in the specification and claims shall not be interpreted as the meaning defined in commonly used dictionaries, but should be interpreted as having a meaning that is consistent with their meaning consistent with the technical idea of the invention, based on the principle that an inventor may properly define the meaning of the words or terms to best explain the invention.

In the descriptions herein, terms such as "include," "provide," and "have" are intended to designate the presence of features, numerals, steps, operations, components, and parts described herein, or combinations thereof, but should not be interpreted to exclude the possibility of presence or addition of one or more other features, numerals, steps, operations, components, parts, or combinations thereof.

Further, when referring to "a to b carbon atoms" in the descriptions, "a" and "b" refer to the number of carbon atoms contained in a particular functional group. That is, the functional group may include "a" to "b" carbon atoms. For example, "alkylene group having 1 to 5 carbon atoms" refers to an alkylene group containing 1 to 5 carbon atoms, i.e. -CH₂-, -CH₂CH₂-, -CH₂CH₂CH₂-, -CH₂(CH₃)CH-, -CH(CH₃)CH₂- and - CH(CH₃)CH₂CH₂-.

Further, in the descriptions herein, the term "alkylene group" refers to a branched or unbranched divalent saturated hydrocarbon group.

Further, in the descriptions herein, all alkyl groups may be substituted or unsubstituted. Unless otherwise defined, the term "substituted" means that at least one hydrogen bonded to the carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, an aryl group having 6 to 20 carbon atoms, a heteroaryl group having 2 to 20 carbon atoms, a haloaryl group having 6 to 20 carbon atoms, a nitro group, or a nitrile group.

When a high-nickel positive electrode active material with high energy density but low stability is used to increase the capacity of a lithium secondary battery, or when the secondary battery is operated at high voltage, the film formed on the surface of the positive electrode or the electrode surface structure deteriorates due to side reactions that occur due to deterioration of the electrolyte as charging and discharging progresses, so that transition metal ions may be eluted from the surface of the positive electrode. As such, the eluted transition metal ions are electro-deposited on the negative electrode and reduce the passivation ability of the solid electrolyte interphase (SEI), resulting in deterioration of the negative electrode.

This deterioration phenomenon of the secondary battery tends to be accelerated when the potential of the positive electrode increases or the battery is exposed to high temperatures, and the deterioration phenomenon causes the cycle characteristics of the secondary battery to deteriorate.

In addition, when a lithium secondary battery is used continuously for a long time or left at a high temperature, gas is generated, and swelling or expansion phenomenon occurs, which increases the thickness of the battery. At this time, the amount of gas generated is known to depend on the state of the SEI.

The present disclosure discloses a lithium secondary battery containing a non-aqueous electrolyte capable of suppressing the elution of metal ions from the positive electrode, forming a stable SEI film on the negative electrode, reducing swelling of the secondary battery, and increasing stability at high temperatures.

Hereinafter, the present disclosure will be described in more detail.

### Non-aqueous Electrolyte

According to an aspect of the present disclosure, a non-aqueous electrolyte contains a lithium salt, an organic solvent; a compound represented by Formula 1 as a first additive, and a compound represented by Formula 2 or Formula 3 as a second additive.

The non-aqueous electrolyte according to the present disclosure contains a compound represented by Formula 1 as a first additive. The compound of Formula 1 is a cyclic sulfate-based compound, and the film formed through the ring-opening reaction of cyclic sulfate may help improve high-temperature durability and implements the effect of improving high-temperature performance. For example, the compound of Formula 1 may form a film having a high lithium mobility due to its structure containing a large amount of O derived from the COO group. In addition, the compound contains functional groups such as F-based, vinyl, and propargyl groups in the structure, which contribute to improving the stability of the battery through the formation of an organic/inorganic composite film. Therefore, the first additive of the present disclosure may suppress the degradation in the passivation ability of SEI at high temperatures, prevents deterioration of the positive electrode, and improves the performance of the lithium secondary battery.

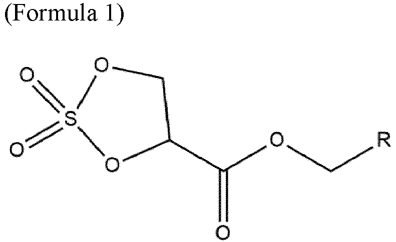

In Formula 1, R may be any one selected from a perfluoroalkyl group having 1 to 5 carbon atoms, an alkenyl group having 2 to 10 carbon atoms, and an alkynyl group having 2 to 10 carbon atoms. For example, R may be a perfluoroalkyl group having 1 to 3 carbon atoms or an alkenyl group having 2 to 5 carbon atoms, and also, for example, any one selected from the group consisting of CF₃, CF₂CF₃, and an ethynyl group. When R is a perfluoroalkyl group, an organic-inorganic composite film may be formed, resulting in a solid and durable film. A film containing an organic component has an excellent lithium transfer property, but is prone to causing side reactions in the acidic atmosphere of the electrolyte, while an inorganic film inhibit side reactions in the acidic atmosphere but have an inferior lithium transfer property. Accordingly, when the organic-inorganic composite film has formed, the overall characteristics of the lithium secondary battery are maximized. When R is an alkenyl group or an alkynyl group, an additional crosslinking reaction may proceed to form a more solid film.

For example, the compound of Formula 1 may be any one selected from the group consisting of Formulas 1-1 to 1-3:

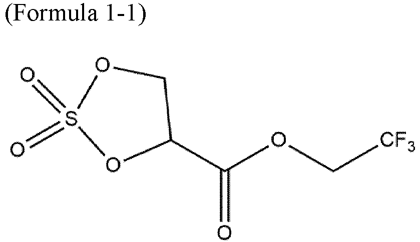

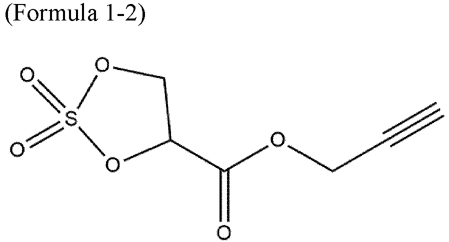

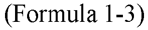

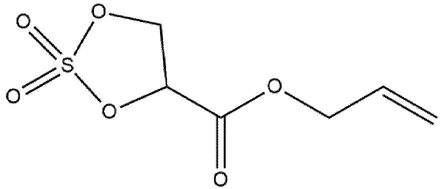

The non-aqueous electrolyte according to the present disclosure contains a compound represented by Formula 2 or Formula 3 as a second additive. The compound of Formula 2 or Formula 3, which contains a propargyl group, is susceptible to reduction on the surface of the negative electrode and may easily form a film on the surface of the negative electrode. This film has higher stability than the SEI film formed by reductive decomposition of a general electrolyte, has low electronic conductivity to suppress further electrolyte decomposition reaction, and has the advantage of not being easily damaged by changes in the volume of the negative electrode. That is, by using the compound of Formula 2 or Formula 3 as an additive to the electrolyte, the stability of the interface between the negative electrode and the electrolyte may be secured.

The compound of Formula 2 contains an oxygen atom and a propargyl group having a triple bond, which is known to have metal ion adsorption performance, so that the propargyl group separated by bond cleavage of the nitrogen (N) atom and carbon (C) atom of the imidazole group adsorbs metal impurities such as Fe, Co, Mn, and Ni eluted from the positive electrode during high-voltage charging of the lithium secondary battery, and effectively suppress the negative electrode deterioration phenomenon caused by the electro-deposition of the metal impurities on the surface of the negative electrode. Further, the compound represented by Formula 2 is reduced on the surface of the negative electrode because the lone pair of the nitrogen (N) atom of the imidazole group reacts with alkyl carbonate, which is a decomposition product of ethylene carbonate (EC) used as an organic solvent. Thus, a stable ionic conductive film may be formed on the surface of the negative electrode. Therefore, it is possible to not only suppress further electrolyte degradation reactions during charge and discharge, but also facilitate the absorption and release of lithium ions from the negative electrode during overcharge or high temperature storage, thereby improving the cycle life characteristics and high temperature storage performance of the secondary battery.

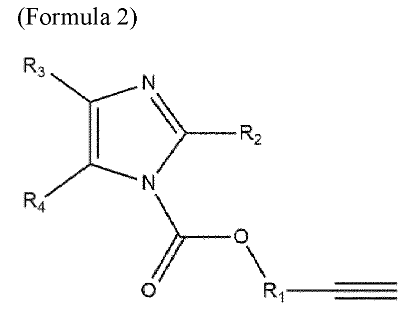

In Formula 2, R₁ may be an alkylene group having 1 to 3 carbon atoms that may be substituted with fluorine, and R₂ to R₄ each independently represent any one selected from the group consisting of H, an alkyl group having 1 to 3 carbon atoms, and a nitrile group.

For example, the compound of Formula 2 of the present disclosure may be a compound of Formula 2-1:

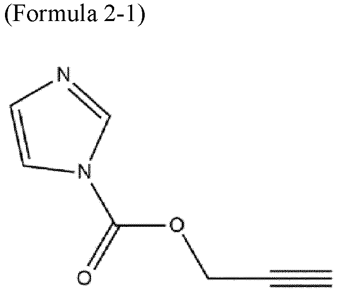

The compound of formula 3 contains an ester functional group and an unsaturated hydrocarbon groups in its molecular structure, which decompose before other components of the electrolyte and during the initial charging of the secondary battery, and form a film mainly composed of a compound based on a carbon-oxygen single bond (C-O) or a carbon-oxygen double bond (C=O), on the surface of the negative electrode. Furthermore, the compound of Formula 3, which contains a propargyl group, is susceptible to reduction on the surface of the negative electrode and may easily form a film on the surface of the negative electrode. This film has higher stability than the SEI film formed by reductive decomposition of a general electrolyte, has low electronic conductivity to suppress further electrolyte decomposition reaction, and has the advantage of not being easily damaged by changes in the volume of the negative electrode.

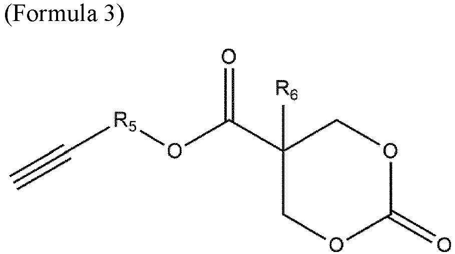

In Formula 3, R₅ may be an alkylene group having 1 to 8 carbon atoms, preferably 1 to 5 carbons atoms that may be substituted with fluorine.

In Formula 3, R₆ may be any one selected from the group consisting of H, an alkyl group having 1 to 10 carbon atoms, and a cycloalkyl group having 3 to 8 carbon atoms.

The compound of Formula 3 may be a compound of Formula 3-1:

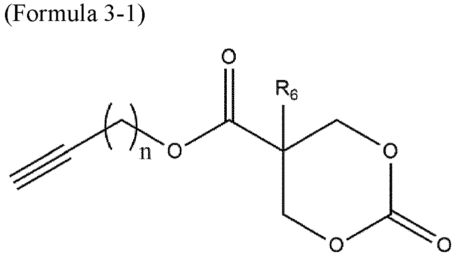

In Formula 3-1, n may be a natural number of 1 to 8, for example, a natural number of 1 to 5, or a natural number of 1 to 3.

In Formula 3-1, R₆ is H, an alkyl group having 1 to 10 carbon atoms, and preferably H or a methyl group.

For example, the compound of Formula 3 of the present disclosure may be a compound of Formula 3-2:

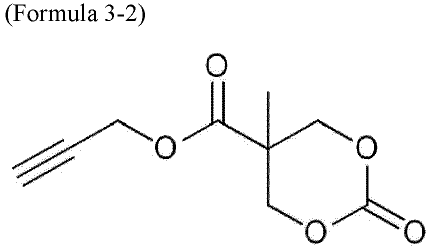

When the non-aqueous electrolyte of the present disclosure containing both the first (Formula 1) and second (Formula 2 or Formula 3) additives is used, the film-forming reaction of the second additive is promoted by radicals generated from the breakage of the ring structure of the first additive. The film formed by the interaction of the first additive and the second additive has an oxadizolidine, imidazole, cyclic carbonate structure or a structure derived therefrom between the aliphatic alkyl group-based films, resulting in a film form with an excellent lithium ion transport property. This improves the overall performance of the lithium secondary battery, such as charge/discharge characteristics and output characteristics. The film formed by the interaction of the first additive and the second additive has excellent oxidation resistance, which may suppress or inhibit side reactions occurring on the film of the positive electrode and the negative electrode even in an acidic atmosphere of the electrolyte. Further, the film formed by the interaction of the first additive and the second additive is highly resistant to negative electrode volume change that occurs during charging and discharging. Thus, the non-aqueous electrolyte of the present disclosure may form a stable and durable electrode-electrolyte interface even at high temperatures, and may suppress or inhibit unnecessary electrolyte decomposition side reactions, thereby enabling a lithium secondary battery with improved overall performance.

In the non-aqueous electrolyte according to the present invention, the first additive may be contained in a content of approximately 0.01 parts by weight to 10 parts by weight, for example, approximately 0.05 parts by weight to 5.0 parts by weight, or approximately 0.10 parts by weight to 3.0 parts by weight, based on 100 parts by weight of the non-aqueous electrolyte. When the content of the first additive satisfies the above range, a film-forming effect on the negative electrode is sufficient, which has the effect of having excellent life characteristics at high temperatures and high temperature storage characteristics.

In the non-aqueous electrolyte according to the present disclosure, the second additive may be contained in a content of approximately 0.01 parts by weight to 5 parts by weight, for example, approximately 0.05 parts by weight to 3.0 parts by weight, or approximately 0.10 parts by weight to 2.5 parts by weight, based on 100 parts by weight of the non-aqueous electrolyte. When the content of the second additive satisfies the above range, a film-forming effect on the negative electrode is sufficient, which has the effect of having excellent life characteristics at high temperatures and high temperature storage characteristics.

In the non-aqueous electrolyte of the present disclosure, the first additive and the second additive may be contained in a weight ratio of 1:0.001 to 1:500, preferably 1:0.01 to 1:300, more preferably 1:0.02 to 1:250. When the above range is satisfied, the elasticity of the SEI film may be in an appropriate range, so that the SEI film remains firm during charge and discharge or at high temperatures.

The non-aqueous electrolyte according to the present disclosure may contain a lithium salt. The lithium salt is used as an electrolyte salt in the lithium secondary battery, which is used as a medium for transferring ions. Typically, the lithium salt includes, for example, Li⁺ as a cation, and at least one anion selected from the group consisting of F⁻, Cl⁻, Br⁻, I⁻, NO₃⁻, N(CN)₂⁻, BF₄, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specific example of the lithium salt include a single substance or a mixture of two or more selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂ (lithium bis(fluorosulfonyl)imide; LiFSI), LiN(SO₂CF₂CF₃)₂ (lithium bis(perfluoroethenesulfonyl)imide; LiBETI), and LiN(SO₂CF₃)₂ (lithium bis(trifluoromethanesulfonyl)imide; LiTFSI). In addition to these, any lithium salts commonly used in the electrolyte of the lithium secondary batteries may be used without limitation.

The lithium salt may be suitably changed within the commonly available range, but in order to obtain an optimal corrosion-resistant film-forming effect on the electrode surface, it may be contained in the electrolyte at a concentration of 0.1 M to 4.0 M, preferably 1.0 M to 3.0 M, more preferably 1.2 M to 2.5 M. When the concentration of the lithium salt satisfies the above range, the effect of improving cycle characteristics during high temperature storage of the lithium secondary battery is sufficient, and the viscosity of the non-aqueous electrolyte is appropriate, so that electrolyte impregnation may be improved.

The non-aqueous electrolyte according to the present disclosure may contain an organic solvent. The organic solvent may include at least one organic solvent selected from the group consisting of a cyclic carbonate-based organic solvent, a linear carbonate-based organic solvent, a linear ester-based organic solvent, and a cyclic ester-based organic solvent.

In some embodiments, the additive is effective when a cyclic carbonate solvent is used. When using a conventional electrolyte additive along with the cyclic carbonate solvent, the SEI film formed by the decomposition of the cyclic carbonate solvent is difficult to maintain due to the volume change of the negative electrode that occurs during the cycle, resulting in continued solvent decomposition. As a result, there was a problem that the ionic conductivity of the electrolyte decreased and the cycle characteristics deteriorated. However, when the additive combination according to the present disclosure is used together with a cyclic carbonate solvent, a solid SEI film may be formed, thereby maintaining high cycle characteristics.

The cyclic carbonate-based organic solvent is, for example, a high-viscosity organic solvent that has a high dielectric constant and is able to easily dissociate the lithium salt in the electrolyte. Specific examples thereof include at least one selected from the group consisting of ethylene carbonate (EC), propylene carbonate (PC), fluoroethylene carbonate (FEC), 1,2-butylene carbonate, 2,3-butylene carbonate, 1,2-pentylene carbonate, 2,3-pentylene carbonate, and vinylene carbonate, and among these, fluoroethylene carbonate (FEC) may be included.

Further, the linear carbonate-based organic solvent is, for example, an organic solvent having low viscosity and low dielectric constant, and representative examples thereof include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, and among these, diethyl carbonate (DEC) may be included.

Further, in order to prepare an electrolyte having high ionic conductivity, the organic solvent may include at least one carbonate-based organic solvent selected from the group consisting of the cyclic carbonate-based organic solvent and the linear carbonate-based organic solvent, and additionally, at least one ester-based organic solvent selected from the group consisting of a linear ester-based organic solvent and a cyclic ester-based organic solvent.

Specific examples of the linear ester-based organic solvent include at least one selected from the group consisting of methyl acetate, ethyl acetate, propyl acetate, methyl propionate, ethyl propionate, propyl propionate, and butyl propionate.

Further, examples of the cyclic ester-based organic solvent include at least one selected from the group consisting of γ-butyrolactone, γ-valerolactone, γ-caprolactone, σ-valerolactone, and ε-caprolactone.

Meanwhile, the organic solvent may further include, without limitation, an organic solvent commonly used in non-aqueous electrolytes as needed. For example, the organic solvent may further include at least one selected from the group consisting of an ether-based organic solvent, a glyme-based solvent, and a nitrile-based organic solvent.

The ether-based solvent used herein may be any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl )-1,3-dioxolane (TFDOL), or a mixture of two or more thereof, but is not limited thereto.

The glyme-based solvent has a high dielectric constant and low surface tension compared to the linear carbonate-based organic solvent, and low reactivity with metal, and may include at least one selected from the group consisting of dimethoxyethane (glyme, DME), diethoxyethane, diglyme, triglyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, and 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

In addition, the non-aqueous electrolyte of the present disclosure may further include any other known electrolyte additives in the non-aqueous electrolyte as needed to prevent the non-aqueous electrolyte from decomposing in a high power environment and causing negative electrode collapse, or to further improve the low temperature high rate discharge characteristics, high temperature stability, overcharge prevention, battery expansion suppression effect at high temperature, and the like.

Such other electrolyte additives may include at least one SEI film-forming additive selected from the group consisting of, by way of example, a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be vinylene carbonate (VC) or vinylethylene carbonate.

The halogen-substituted carbonate-based compound may be fluoroethylene carbonate (FEC).

The sultone-based compound may be at least one selected from the group consisting of 1,3-propanesultone (PS), 1,4-butanesultone, ethenesultone, 1,3-propenesultone (PRS), 1,4-butene sultone, and 1-methyl-1,3-propenesultone.

The sulfate-based compound may be ethylene sulfate (Esa), trimethylene sulfate (TMS), or methyl trimethylene sulfate (MTMS).

The phosphate-based compound may be at least one selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(2,2,2-trifluoroethyl)phosphite.

The borate-based compound may be tetraphenylborate, lithium difluoro(oxalato)borate (LiODFB), and lithium bisoxalate borate (LiB(C₂O₄)₂, LiBOB).

The nitrile-based compound may be at least one selected from the group consisting of succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine or ethylenediamine, and the silane-based compound may be tetravinylsilane.

The lithium salt-based compound is a compound different from the lithium salt contained in the non-aqueous electrolyte, and may be lithium difluorophosphate (LiDFP), LiPO₂F₂, or LiBF₄.

Among these other electrolyte additives, when a combination of vinylene carbonate (VC), 1,3-propane sultone (PS), ethylene sulfate (Esa), and lithium difluorophosphate (LiDFP) is additionally contained, it is possible to form a more solid SEI film on the negative electrode surface during the initial activation process of the secondary battery, and suppress gas generation due to the decomposition of the electrolyte at high temperatures, thereby improving the high-temperature stability of the secondary battery.

Meanwhile, the other electrolyte additives may be used in combination of two or more types, and may be contained in an amount of 0.050 to 20% by weight, specifically 0.10 to 15% by weight, preferably 0.30 to 10% by weight, based on the total weight of the non-aqueous electrolyte. When the content of the other electrolyte additives satisfies the above range, the effect of improving ionic conductivity and cycle characteristics is more excellent.

### Lithium Secondary Battery

The present disclosure further provides a lithium secondary battery including the above-described non-aqueous electrolyte.

For example, the lithium secondary battery includes a positive electrode including a positive electrode active material, a negative electrode including a negative electrode active material, a separator disposed between the positive electrode and the negative electrode, and a non-aqueous electrolyte as described above.

At this time, the lithium secondary battery of the present disclosure may be manufactured according to a common method known in the art. For example, the lithium secondary battery of the present disclosure may be manufactured by sequentially stacking the positive electrode, the negative electrode, and the separator between the positive electrode and the negative electrode to form an electrode assembly, then the inserting the electrode assembly into a battery case, and injecting the non-aqueous electrolyte according to the present disclosure thereto.

### (1) Positive Electrode

The positive electrode may be prepared by coating a positive electrode mixture slurry containing a positive electrode active material, a binder, a conductive material, and a solvent, on a positive electrode collector.

The positive electrode collector is not particularly limited as long as it is conductive without causing chemical changes in the battery, and examples thereof include stainless steel, aluminum, nickel, titanium, calcined carbon, or aluminum or stainless steel subjected to surface treatment with carbon, nickel, titanium, or silver.

The positive electrode active material is, for example, a compound capable of reversible intercalation and deintercalation of lithium, and, may include lithium metal oxide containing lithium and one or more metal elements such as cobalt, manganese, nickel, or aluminum. Examples of the lithium metal oxide include lithium-manganese-based oxides (*e.g*., LiMnO₂ and LiMn₂O₄), lithium-cobalt-based oxides (*e.g*., LiCoO₂), lithium-nickel-based oxides (*e.g*., LiNiO₂), lithium-nickel-manganese-based oxides (*e.g*., LiNi_{1-Y}Mn_{Y}O₂ (here, 0<Y<1) and LiMn_{2-Z}Ni_{Z}O₄ (here, 0<Z<2)), lithium-nickel-cobalt-based oxides (*e*.*g*., LiNi_{1-Y1}Co_{Y1}O₂ (here, 0<Y1<1)), lithium-manganese-cobalt-based oxides (*e*.*g*., LiCo_{1-Y2}Mn_{Y2}O₂ (here, 0<Y2<1) and LiMn_{2-Z1}Co_{Z1}O₄ (here, 0<Z1<2)), lithium-nickel-manganese-cobalt-based oxides (e.g., Li(NiₚCo_{q}Mnᵣ)O₂ (here, 0< p<1, 0 < q<1, 0<r<1, p+q+r=1) and Li(Niₚ₁Co_{q1}Mnᵣ₁)O₄ (here, 0<p1<2, 0<q1<2, 0<r1<2, p1+q1+r1=2)), and lithium-nickel-cobalt-transition metal (M) oxides (e.g., Li(Niₚ₂Co_{q2}Mnᵣ₂Mₛ₂)O₂ (here, M is selected from the group consisting of Al, Fe, V, Cr, Ti, Ta, Mg, and Mo, and p2, q2, r2, and s2 are atomic fractions of independent elements, respectively, 0<p2<1, 0<q2<1, 0<r2<1, 0<s2<1, p2+q2+r2+s2=1)), and these oxides may be used alone or in mixture of two or more thereof.

Among them, from the view point of view of increasing the capacity characteristics and stability of the battery, the lithium metal oxide may be LiCoO₂, LiMnO₂, LiNiO₂, lithium nickel manganese cobalt oxide (*e*.*g*., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), or lithium nickel cobalt aluminum oxide (*e.g.,* Li(Ni_{0.8}Co_{0.15}Al_{0.05})O₂, and these may be used alone or in mixtures of two or more thereof.

The positive electrode active material may be contained in an amount of 60% by weight to 99% by weight, preferably 70% by weight to 99% by weight, more preferably 80% by weight to 98% by weight, based on the total weight of solids excluding the solvent in the positive electrode mixture slurry.

The binder is a component that assists in the bonding of the active material and the conductive material and the bonding to the collector.

Examples of the binder include polyvinylidene fluoride, polyvinyl alcohol, starch, hydroxypropylcellulose, regenerated cellulose, polyvinylpyrrolidone, polytetrafluoroethylene, polyethylene (PE), polypropylene, ethylene-propylene-diene monomer, sulfonated ethylene-propylene-diene monomer, styrene-butadiene rubber, fluorinated rubber, and various copolymers thereof.

Typically, the binder may be contained in an amount of approximately 1% by weight to 20% by weight, for example, 1% by weight to 15% by weight, or 1% by weight to 10% by weight, based on the total weight of solids excluding the solvent in the positive electrode mixture slurry.

The conductive material is a component to further improve the conductivity of the positive electrode active material, and may be added in an amount of approximately 1% by weight to 20% by weight based on the total weight of solids in the positive electrode mixture slurry. The conductive material is not particularly limited as long as it is conductive without causing chemical changes in the battery, and examples thereof include carbon powders such as carbon black, acetylene black, Ketjen black, channel black, furnace black, lamp black, and thermal black; graphite powders such as natural graphite, artificial graphite, and graphite with a highly developed crystal structure; conductive fibers such as carbon fiber and metal fiber; fluorinated carbon powders; conductive powders such as aluminum powder and nickel powder; conductive whiskers such as zinc oxide and potassium titanate; conductive metal oxides such as titanium oxide; conductive materials such as polyphenylene derivatives.

Typically, the conductive material may be contained in an amount of 1% by weight to 20% by weight, preferably 1% by weight to 15% by weight, more preferably 1% by weight to 10% by weight, based on the total weight of solids excluding the solvent in the positive electrode mixture slurry.

The solvent may include an organic solvent such as NMP (N-methyl-2-pyrrolidone), and may be used in an amount that achieves a desirable viscosity when including the positive electrode active material and, optionally, a binder and a conductive material. For example, the solvent may be contained such that the concentration of solids including the positive electrode active material and optionally the binder and conductive material may be 50 to 95% by weight, preferably 70 to 95% by weight, more preferably 70 to 90% by weight.

### (2) Negative Electrode

The negative electrode can be prepared, for example, by coating a negative electrode mixture slurry containing a negative electrode active material, a binder, a conductor, and a solvent, on a negative electrode collector, or by using a graphite electrode composed made of carbon (C) or the metal itself as the negative electrode.

For example, when the negative electrode is prepared by coating a negative electrode mixture slurry on THE negative electrode collector, the negative electrode collector generally has a thickness of approximately 3 µm to 500 µm. The negative electrode collector is not particularly limited as long as it has high conductivity without causing chemical changes in the battery, and examples thereof include copper, stainless steel, aluminum, nickel, titanium, calcined carbon, copper, or stainless steel subjected to surface treatment with carbon, nickel, titanium, or silver, and aluminum-cadmium alloys. In addition, like the positive electrode collector, the negative electrode collector may have fine irregularities formed on the surface to strengthen the bonding power of the negative electrode active material, and may be used in various forms such as films, sheets, foils, nets, porous materials, foams, and non-woven materials.

Further, the negative electrode active material may include at least one selected from the group consisting of a lithium metal, a carbon material capable of reversibly intercalating/deintercalating lithium ions, a metal or an alloy of a metal and lithium, a metal complex oxide, a material capable of doping and de-doping lithium, and a transition metal oxide.

As the carbon material capable of reversibly intercalating/deintercalating lithium ions, any carbon-based negative electrode active material commonly used in the lithium-ion secondary battery may be used without particular limitation, and representative examples thereof include crystalline carbon, amorphous carbon, and a combination thereof. Examples of the crystalline carbon include graphite, such as natural or artificial graphite in amorphous, plate, flake, spherical, or fibrous form, and examples of the amorphous carbon include soft carbon (low temperature calcined carbon) or hard carbon, mesophase pitch carbide, and calcined coke.

The metal or alloy of the metal and lithium may be a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of these metals and lithium.

The metal complex oxide may be selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤0x≤1), LiₓWO₃ (0≤x≤1), and SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3 ; 1≤z≤8).

The material capable of doping and dedoping lithium includes, for example, Si, SiOₓ (0<x≤2), and Si-Y alloy (where Y is an element selected from the group consisting of an alkali metal, alkaline earth metal, Group 13 element, Group 14 element, transition metal, rare earth, and combinations thereof, but not Si), Sn, SnO₂, and Sn-Y (where Y is an element selected from the group consisting of an alkali metal, an alkaline earth metal, a Group 13 element, a Group 14 element, a transition metal, a rare earth element, and combinations thereof, but not Sn), and at least one of these may be mixed with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

The transition metal oxide include lithium-containing titanium composite oxide (LTO), vanadium oxide, and lithium vanadium oxide.

The additive according to the present disclosure is effective when Si or SiOₓ (0<x≤2) is used as the negative electrode active material. For example, in the case of using a Si-based negative electrode active material, if a solid SEI layer is not formed on the surface of the negative electrode during initial activation, the degradation of life characteristics is accelerated due to extreme volume expansion-contraction during the cycle. However, the additive according to the present disclosure may form a resilient and solid SEI layer on the surface of the negative electrode, thereby improving the lifespan and storage characteristics of the secondary battery using the Si-based negative electrode active material.

The negative electrode active material may be contained in an amount of 60% by weight to 99% by weight, preferably 70% by weight to 99% by weight, and more preferably 80% by weight to 98% by weight, based on the total weight of solids excluding the solvent in the negative electrode mixture slurry.

Examples of the binder include polyvinylidene fluoride (PVDF), polyvinyl alcohol, starch, hydroxypropyl cellulose, regenerated cellulose, polyvinylpyrrolidone, polytetrafluoroethylene, polyethylene, polypropylene, ethylene-propylene-diene monomer, sulfonated ethylene-propylene-diene monomer, styrene-butadiene rubber, fluorinated rubber, and various copolymers thereof. For example, styrene-butadiene rubber (SBR)-carboxymethyl cellulose (CMC) may be used from the view point of its high viscosity.

Typically, the binder may be contained in an amount of 1% by weight to 20% by weight, preferably 1% by weight to 15% by weight, or more preferably 1% by weight to 10% by weight, based on the total weight of solids excluding the solvent in the negative electrode mixture slurry.

The conductive material is a component to further improve the conductivity of the negative electrode active material, and may be added in an amount of approximately 1% by weight to 20% by weight based on the total weight of solids in the negative electrode mixture slurry. The conductive material is not particularly limited as long as it is conductive without causing chemical changes in the battery, and examples thereof include carbon powders such as carbon black, acetylene black, Ketjen black, channel black, furnace black, lamp black, and thermal black; graphite powders such as natural graphite, artificial graphite, and graphite with a highly developed crystal structure; conductive fibers such as carbon fiber and metal fiber; fluorinated carbon powders; conductive powders such as aluminum powder and nickel powder; conductive whiskers such as zinc oxide and potassium titanate; conductive metal oxides such as titanium oxide; conductive materials such as polyphenylene derivatives.

The conductive material may be contained in an amount of 1% by weight to 20% by weight, preferably 1% by weight to 15% by weight, or more preferably 1% by weight to 10% by weight, based on the total weight of solids excluding the solvent in the negative electrode mixture slurry.

The solvent may include an organic solvent such as NMP (N-methyl-2-pyrrolidone), and may be used in an amount that achieves a desirable viscosity when containing the negative electrode active material and, optionally, a binder and a conductive material. For example, the solvent may be contained such that the concentration of solids including the negative electrode active material and optionally the binder and conductive material may be approximately 50% by weight to 95% by weight, for example, approximately 70% by weight to 90% by weight.

When metal itself is used as the negative electrode, the negative electrode may be manufactured by physically bonding, rolling, or depositing metal on a thin metal film itself or the negative electrode collector. The method of depositing the metal may be by electrical deposition or chemical vapor deposition.

For example, the metal to be bonded/rolled/deposited on the metal thin film itself or the negative electrode collector is one selected from the group consisting of lithium (Li), nickel (Ni), tin (Sn), copper (Cu), and indium (In), or an alloy of two thereof.

### (3) Separator

In addition, the separator that may be used herein may be any porous polymer films commonly used as a separator, for example, a porous polymer film made of polyolefin-based polymers such as ethylene homopolymer, propylene homopolymer, ethylene/butene copolymer, ethylene/hexene copolymer, and ethylene/methacrylate copolymer, which may be used alone or laminated therewith. Alternatively, the separator that may be used herein may be any porous non-woven fabrics, for example, non-woven fabrics made of high melting point glass fibers or polyethylene terephthalate fibers, but not limited thereto. Further, a coated separator containing ceramic components or polymer materials may be used to ensure heat resistance or mechanical strength, and may optionally be used in a single-layer or multi-layer structure.

For example, the separator included in the electrode assembly of the present invention may be a safety reinforced separator (SRS) separator formed with a coating layer containing a ceramic component or a polymer material to ensure heat resistance or mechanical strength.

For example, the separator included in the electrode assembly of the present disclosure include a porous separator substrate and a porous coating layer entirely coated on one or both sides of the separator substrate, and the coating layer include a mixture of inorganic particles selected from metal oxides, metalloid oxides, metal fluorides, metal hydroxides, and combinations thereof, and a binder polymer that connects and fixes the inorganic particles to each other.

The coating layer may include one or more inorganic particles selected from Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, and MgF. Here, the inorganic particles may improve the thermal stability of the separator. In other words, the inorganic particles may prevent the separator from shrinking at high temperatures. In addition, the binder polymer may improve the mechanical stability of the separator by immobilizing the inorganic particles.

The shape of the lithium secondary battery of the present disclosure is not particularly limited, but may be a cylindrical shape using a can, a square shape, a pouch shape, or a coin shape.

Hereinafter, the present disclosure will be described in more detail through specific examples. However, the following examples are intended to illustrate the invention and are not intended to limit the scope of the present disclosure. It will be obvious to those skilled in the art that various changes and modifications may be made within the scope of the present description and the technical idea, and that such changes and modifications fall within the scope of the appended claims.

### EXAMPLE

### Example 1

### (Preparation of Non-aqueous Electrolyte)

LiPF₆ was dissolved in an organic solvent (ethylene carbonate (EC):ethyl methyl carbonate (EMC):diethyl carbonate (DEC) = 20:70:10 by volume) to 1.2 M to prepare a non-aqueous solvent, and 0.01 g of the compound of Formula 1-1 and 0.01 g of the compound of Formula 2-1 were added to 99.98 g of the non-aqueous solvent to prepare a non-aqueous electrolyte.

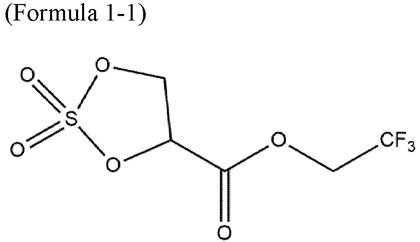

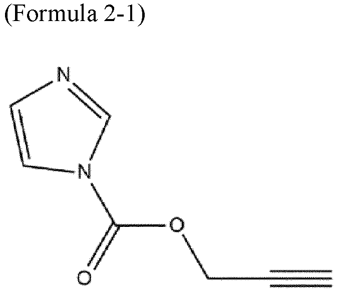

### (Preparation of Lithium Secondary Battery)

A positive electrode active material (LiNi_{0.6}Co_{0.1}Mn_{0.3}O₂), a conductive material (carbon nanotube), and a binder (polyvinylidene fluoride) were added to a solvent N-methyl-2-pyrrolidone (NMP) in a weight ratio of about 97.74:0.7:1.56 to prepare a positive electrode slurry (75.5 wt% solids). The positive electrode slurry was applied to one side of a positive electrode collector (Al thin film) having a thickness of 15 µm, dried, and roll pressed to prepare a positive electrode.

A negative electrode active material (natural graphite), a conductive material (carbon black), and a binder (styrene-butadiene rubber (SBR)-carboxymethyl cellulose (CMC)) were added to the solvent N-methyl-2-pyrrolidone (NMP) in a weight ratio of about 70:20.3:9.7 to prepare a negative electrode slurry (26 wt% solids). The negative electrode slurry was applied to one side of a negative electrode collector (Cu thin film) having a thickness of 15 µm, dried, and roll pressed to prepare a negative electrode.

A polyolefin-based porous separator coated with inorganic particles (Al₂O₃) was interposed between the prepared positive electrode and negative electrode in a dry room, and then the prepared non-aqueous electrolyte was injected to prepare a secondary battery.

### Example 2

A secondary battery was prepared in the same manner as in Example 1, except that 0.01 g of the compound of Formula 1-1 and 0.01 g of the compound of Formula 3-2 were added to 99.98 g of the non-aqueous solvent prepared in Example 1 to prepare a non-aqueous electrolyte.

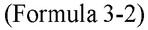

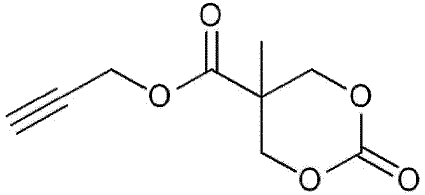

### Example 3

A secondary battery was prepared in the same manner as in Example 1, except that 0.01 g of the compound of Formula 1-1 and 5 g of the compound of Formula 2-1 were added to 94.99 g of the non-aqueous solvent prepared in Example 1 to prepare a non-aqueous electrolyte.

### Example 4

A secondary battery was prepared in the same manner as in Example 1, except that 0.01 g of the compound of Formula 1-1 and 5 g of the compound of Formula 3-2 were added to 94.99 g of the non-aqueous solvent prepared in Example 1 to prepare a non-aqueous electrolyte.

### Example 5

A secondary battery was prepared in the same manner as in Example 1, except that 5 g of the compound of Formula 1-1 and 1 g of the compound of Formula 2-1 were added to 94 g of the non-aqueous solvent prepared in Example 1 above to prepare a non-aqueous electrolyte.

### Example 6

A secondary battery was prepared in the same manner as in Example 1, except that 10 g of the compound of Formula 1-1 and 0.01 g of the compound of Formula 2-1 were added to 89.99 g of the non-aqueous solvent prepared in Example 1 to prepare a non-aqueous electrolyte.

### Example 7

A secondary battery was prepared in the same manner as in Example 1, except that 10 g of the compound of Formula 1-1 and 5 g of the compound of Formula 2-1 were added to 85 g of the non-aqueous solvent prepared in Example 1 to prepare a non-aqueous electrolyte.

### Example 8

A secondary battery was prepared in the same manner as in Example 1, except that 10 g of the compound of Formula 1-1 and 0.01 g of the compound of Formula 3-2 were added to 89.99 g of the non-aqueous solvent prepared in Example 1 to prepare a non-aqueous electrolyte.

### Example 9

A secondary battery was prepared in the same manner as in Example 1, except that 10 g of the compound of Formula 1-1 and 5 g of the compound of Formula 3-2 were added to 85 g of the non-aqueous solvent prepared in Example 1 to prepare a non-aqueous electrolyte.

### Example 10

A secondary battery was prepared in the same manner as in Example 1, except that 0.01 g of the compound of Formula 1-2 and 0.01 g of the compound of Formula 2-1 were added to 99.98 g of the non-aqueous solvent prepared in Example 1 to prepare a non-aqueous electrolyte.

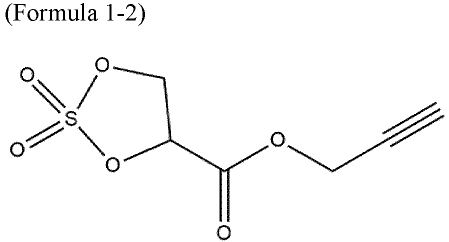

### Example 11

A secondary battery was prepared in the same manner as in Example 1, except that 10 g of the compound of Formula 1-2 and 0.01 g of the compound of Formula 2-1 were added to 89.99 g of the non-aqueous solvent prepared in Example 1 to prepare a non-aqueous electrolyte.

### Example 12

A secondary battery was prepared in the same manner as in Example 1, except that 0.01 g of the compound of Formula 1-2 and 5 g of the compound of Formula 2-1 were added to 94.99 g of the non-aqueous solvent prepared in Example 1 above to prepare a non-aqueous electrolyte.

### Example 13

A secondary battery was prepared in the same manner as in Example 1, except that 10 g of the compound of Formula 1-2 and 5 g of the compound of Formula 2-1 were added to 85 g of the non-aqueous solvent prepared in Example 1 above to prepare a non-aqueous electrolyte.

### Example 14

A secondary battery was prepared in the same manner as in Example 1, except that 0.01 g of the compound of Formula 1-3 and 0.01 g of the compound of Formula 2-1 were added to 99.98 g of the non-aqueous solvent prepared in Example 1 to prepare a non-aqueous electrolyte.

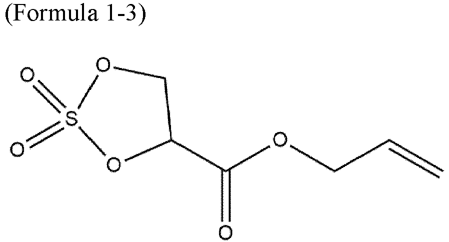

### Example 15

A secondary battery was prepared in the same manner as in Example 1, except that 10 g of the compound of Formula 1-3 and 0.01 g of the compound of Formula 2-1 were added to 89.99 g of the non-aqueous solvent prepared in Example 1 to prepare a non-aqueous electrolyte.

### Example 16

A secondary battery was prepared in the same manner as in Example 1, except that 0.01 g of the compound of Formula 1-3 and 5 g of the compound of Formula 2-1 were added to 94.99 g of the non-aqueous solvent prepared in Example 1 above to prepare a non-aqueous electrolyte.

### Example 17

A secondary battery was prepared in the same manner as in Example 1, except that 10 g of the compound of Formula 1-3 and 5 g of the compound of Formula 2-1 were added to 85 g of the non-aqueous solvent prepared in Example 1 above to prepare a non-aqueous electrolyte.

### Comparative Example 1

A secondary battery was prepared in the same manner as in Example 1, except that 0.01 g of the compound of Formula 1-1 was added to 99.99 g of the non-aqueous solvent prepared in Example 1 to prepare a non-aqueous electrolyte.

### Comparative Example 2

A secondary battery was prepared in the same manner as in Example 1, except that 10 g of the compound of Formula 1-1 was added to 90 g of the non-aqueous solvent prepared in Example 1 to prepare a non-aqueous electrolyte.

### Comparative Example 3

A secondary battery was prepared in the same manner as in Example 1, except that 0.01 g of the compound of Formula 2-1 was added to 99.99 g of the non-aqueous solvent prepared in Example 1 to prepare a non-aqueous electrolyte.

### Comparative Example 4

A secondary battery was prepared in the same manner as in Example 1, except that 5 g of the compound of Formula 2-1 was added to 95 g of the non-aqueous solvent prepared in Example 1 to prepare a non-aqueous electrolyte.

### Comparative Example 5

A secondary battery was prepared in the same manner as in Example 1, except that 0.01 g of the compound of Formula 3-2 was added to 99.99 g of the non-aqueous solvent prepared in Example 1 to prepare a non-aqueous electrolyte.

### Comparative Example 6

A secondary battery was prepared in the same manner as in Example 1, except that 5 g of the compound of Formula 3-2 was added to 95 g of the non-aqueous solvent prepared in Example 1 to prepare a non-aqueous electrolyte.

### Experimental Example 1 - Evaluation of high temperature cycle characteristics

For each of the secondary batteries prepared in Examples 1 to 17 and Comparative Examples 1 to 6, cycle characteristics were evaluated.

For example, each of the batteries prepared in Examples 1 to 17 and Comparative Examples 1 to 6 was charged (0.05C cut off) to 4.2V at 45°C at a rate of 0.33C under constant current/constant voltage conditions, and discharged to 3.0V at a constant current of 0.33C, which were regarded as one cycle. Then, 200 cycles of the charging and discharging were performed, and the capacity retention rate after 200 cycles was measured relative to the initial capacity after 1 cycle. In addition, the resistance increase rate after 200 cycles was measured compared to the initial resistance after 1 cycle. The results are shown in Table 1 below.

**[Table 1]**

| | Capacity retention rate (%) | Resistance increase rate (%) |
|---|---|---|
| Example 1 | 92 | 10 |
| Example 2 | 93 | 9 |
| Example 3 | 92 | 9 |
| Example 4 | 93 | 9 |
| Example 5 | 94 | 7 |
| Example 6 | 93 | 10 |
| Example 7 | 91 | 8 |
| Example 8 | 93 | 8 |
| Example 9 | 92 | 8 |
| Example 10 | 93 | 10 |
| Example 11 | 92 | 9 |
| Example 12 | 91 | 8 |
| Example 13 | 92 | 8 |
| Example 14 | 93 | 9 |
| Example 15 | 93 | 10 |
| Example 16 | 92 | 8 |
| Example 17 | 91 | 8 |
| Comparative Example 1 | 64 | 56 |
| Comparative Example 2 | 66 | 55 |
| Comparative Example 3 | 66 | 56 |
| Comparative Example 4 | 63 | 54 |
| Comparative Example 5 | 65 | 55 |
| Comparative Example 6 | 63 | 55 |

### Experimental Example 2 - Evaluation of high temperature storage characteristics

For each of the secondary batteries prepared in Examples 1 to 17 and Comparative Examples 1 to 6, high temperature storage characteristics were evaluated.

For example, the secondary batteries of Examples 1 to 17 and Comparative Examples 1 to 6 were each fully charged to 4.2V and then stored at 60°C for 8 weeks.

Before storage, the capacity of the fully charged secondary battery was measured and set to the capacity of the initial secondary battery.

After 8 weeks, the capacity of the stored secondary battery was measured and the capacity decreased during the 8-week storage period was calculated. The capacity retention rate after 8 weeks was derived by calculating the percentage ratio of the reduced capacity to the initial capacity of the secondary battery. In addition, the percentage ratio of the increased resistance to the initial resistance of the secondary battery was calculated to derive the resistance increase rate after 8 weeks. The results are shown in Table 2 below.

**[Table 2]**

| | Capacity retention rate (%) | Resistance increase rate (%) |
|---|---|---|
| Example 1 | 96 | 8 |
| Example 2 | 97 | 9 |
| Example 3 | 95 | 7 |
| Example 4 | 95 | 8 |
| Example 5 | 97 | 6 |
| Example 6 | 96 | 7 |
| Example 7 | 95 | 8 |
| Example 8 | 96 | 6 |
| Example 9 | 94 | 7 |
| Example 10 | 95 | 9 |
| Example 11 | 95 | 8 |
| Example 12 | 94 | 7 |
| Example 13 | 94 | 8 |
| Example 14 | 95 | 9 |
| Example 15 | 96 | 8 |
| Example 16 | 94 | 7 |
| Example 17 | 95 | 7 |
| Comparative Example 1 | 70 | 53 |
| Comparative Example 2 | 69 | 54 |
| Comparative Example 3 | 71 | 52 |
| Comparative Example 4 | 68 | 51 |
| Comparative Example 5 | 70 | 52 |
| Comparative Example 6 | 69 | 52 |

## Claims

1. A non-aqueous electrolyte comprising:
a lithium salt;
an organic solvent;
a compound represented by Formula 1 as a first additive; and
a compound represented by Formula 2 or Formula 3 as a second additive: 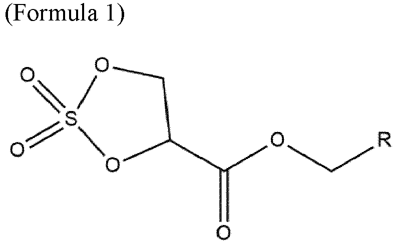
wherein, R represents any one selected from a perfluoroalkyl group having 1 to 5 carbon atoms, an alkenyl group having 2 to 10 carbon atoms, and an alkynyl group having 2 to 10 carbon atoms; 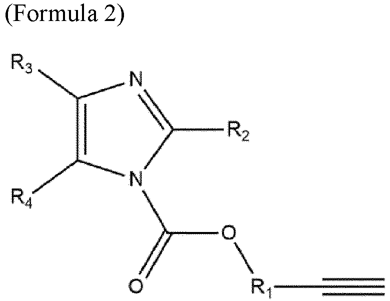
wherein, R₁ represents an alkylene group having 1 to 3 carbon atoms that may be substituted with fluorine, and
R₂ to R₄ each independently represent any one selected from the group consisting of H, an alkyl group having 1 to 3 carbon atoms, and a nitrile group; and 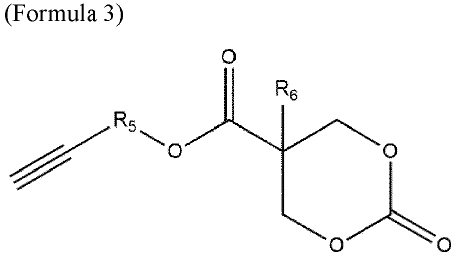
wherein, R₅ represents an alkylene group having 1 to 8 carbon atoms that may be substituted with fluorine, and
R₆ represents any one selected from the group consisting of H, an alkyl group having 1 to 10 carbon atoms, and a cycloalkyl group having 3 to 8 carbon atoms.

2. The non-aqueous electrolyte according to claim 1, wherein the compound represented by Formula 1 is any one selected from the group consisting of Formulas 1-1 to 1-3:

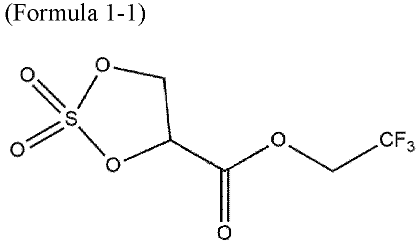

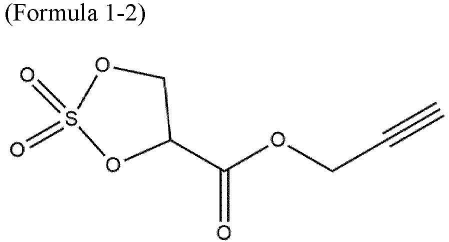

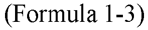

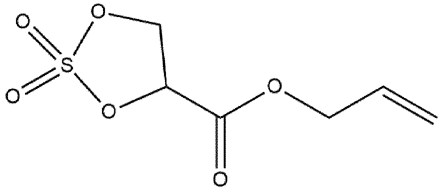

3. The non-aqueous electrolyte according to claim 1, wherein the compound represented by Formula 2 is a compound represented by Formula 2-1:

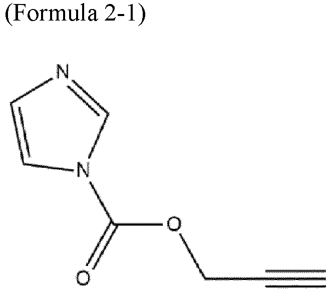

4. The non-aqueous electrolyte according to claim 1, wherein the compound represented by Formula 3 is a compound represented by Formula 3-1: 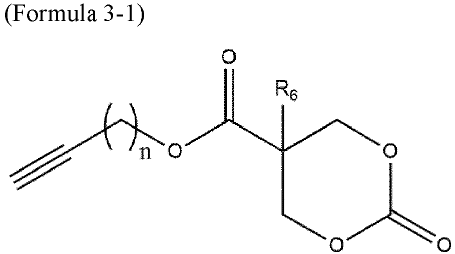
wherein, n is a natural number of 1 to 8, and
R₆ is H, or a substituted or unsubstantiated alkyl group having 1 to 10 carbon atoms.

5. The non-aqueous electrolyte according to claim 1, wherein the compound represented by Formula 3 is a compound represented by Formula 3-2:

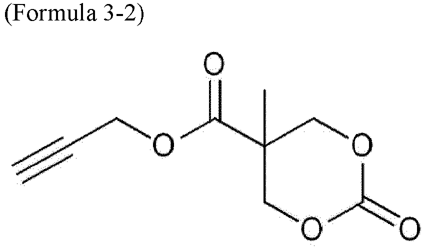

6. The non-aqueous electrolyte according to claim 1, wherein the first additive is contained in an amount of 0.01 parts by weight to 10 parts by weight based on 100 parts by weight of the non-aqueous electrolyte.

7. The non-aqueous electrolyte according to claim 1, wherein the second additive is contained in an amount of 0.01 parts by weight to 5 parts by weight based on 100 parts by weight of the non-aqueous electrolyte.

8. The non-aqueous electrolyte according to claim 1, wherein the first additive and the second additive are contained in a weight ratio of 1:0.001 to 1:500.

9. The non-aqueous electrolyte according to claim 1, wherein the lithium salt is at least one selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN(SO₂CF₂CF₃)₂, and LiN(SO₂CF₃)₂.

10. The non-aqueous electrolyte according to claim 1, wherein the lithium salt is contained in a concentration of 0.1 M to 4.0 M.

11. The non-aqueous electrolyte according to claim 1, wherein the organic solvent includes at least one selected from the group consisting of a cyclic carbonate-based organic solvent, a linear carbonate-based organic solvent, a linear ester-based organic solvent, and a cyclic ester-based organic solvent.

12. A lithium secondary battery comprising:
a positive electrode;
a negative electrode;
a separator; and
the non-aqueous electrolyte of claim 1.

13. An electronic device comprising the lithium secondary battery of claim 12.
